# EUROPEAN PATENT APPLICATION

(11) **EP 2 267 922 A1**
(43) Date of publication of application: **29.12.2010**
(21) Application number: 09716369.5
(22) Date of filing: 05.03.2009
(51) Int. Cl.: H04B 10/04, H04B 10/06, H04B 10/14, H04B 10/26, H04B 10/28

(54) **LIGHT TRANSMITTING DEVICE**

(30) Priority: 05.03.2008 JP 2008054833; 09.06.2008 JP 2008150364
(71) Applicant: Fujikura, Ltd., Tokyo 135-8512 (JP)
(72) Inventor: AZEGAMI, Koji, Sakura-shi Chiba 285-8550 (JP); KANNO, Yoshiaki, Sakura-shi Chiba 285-8550 (JP); KIMURA, Naoki, Sakura-shi Chiba 285-8550 (JP); SHIMIZU, Hiroki, Sakura-shi Chiba 285-8550 (JP); OTAKE, Mamoru, Sakura-shi Chiba 285-8550 (JP); FUKUDA, Takeshi, Sakura-shi Chiba 285-8550 (JP)
(74) Representative: Cabinet Plasseraud
(86) International application number: PCT/JP2009/054211
(87) International publication number: WO 2009/110571

(57) **Abstract**

An optical transmission device includes: an optical transmission unit including a light-emitting element; an optical reception unit including a static current source generating bias current for driving the light-emitting element; a light-transmitting medium optically connecting the light-emitting element and a light-receiving element to each other; and an electricity-transmitting medium transmitting the bias current from the static current source to the light-emitting element.

## Description

### Technical Field

The present invention relates to an optical transmission device including an optical semiconductor and a transmission line so as to transmit information by optical communication over a relatively short transmission distance in an apparatus or between apparatuses. This optical communication over a short distance will be applied to the fields of high-speed data transmission devices such as a server or a router, vehicles, mobile phones, business copiers, and game machines in the future.
Priority is claimed on Japanese Patent Application No. 2008-54833 filed on March 5, 2008 and Japanese Patent Application No. 2008-150364 filed on June 9, 2008, the contents of which are incorporated herein by reference.

### Background Art

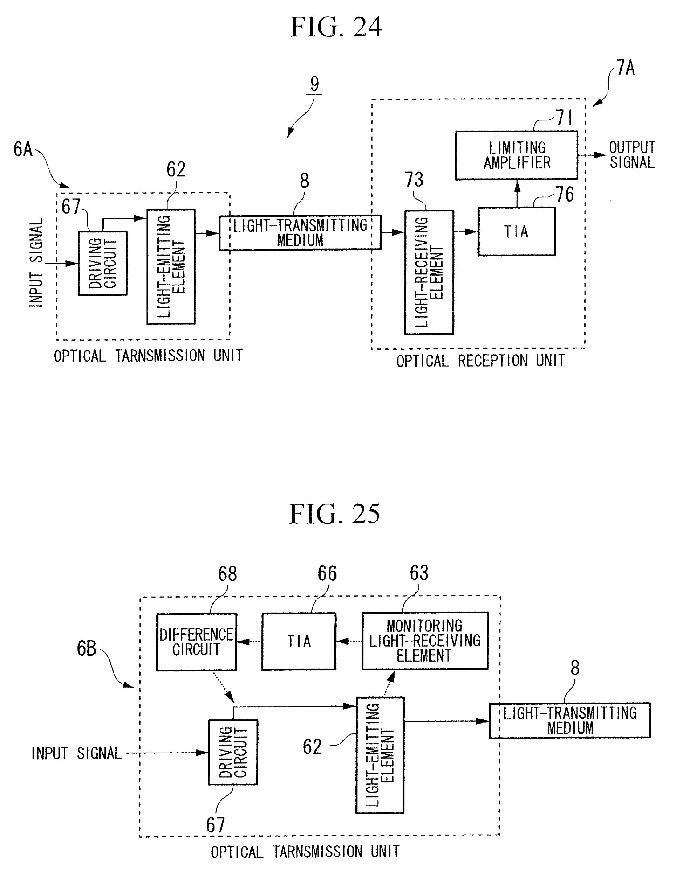

An example of a known optical transmission device is shown in FIG. 24.
An optical transmission device 9 shown in FIG. 24 includes an optical transmission unit 6A having a light-emitting element 62, an optical reception unit 7A having a light-receiving element 73, and a light-transmitting medium 8 optically coupling the light-emitting element 62 and the light-receiving element 72 to each other. A laser diode is an example of the light-emitting element 62 and a photo diode is an example of the light-receiving element 73. An optical fiber or a polymer light waveguide is used as the light-transmitting medium 8.
The optical transmission unit 6A further includes a driving circuit 67 such as a laser driving IC controlling the emission of the light-emitting element 62. The optical reception unit 7A further includes a trans-impedance amplifier (TIA) 76 and a limiting amplifier 71.

The optical transmission device 9 having the above-mentioned configuration basically operates as follows.
First, when an input signal is input from the outside, the driving circuit 67 of the optical transmission unit 6A changes the supply current to the light-emitting element 62. The light-emitting element 62 outputs light which varies with the variation in supply current. The light-receiving element 73 of the optical reception unit 7A receives the light output from the light-emitting element 62, generates current corresponding to the received light intensity, and outputs the generated current to the trans-impedance amplifier 76. The trans-impedance amplifier 76 converts the input current into a voltage and amplifies and outputs the voltage to the limiting amplifier 71. The limiting amplifier 71 amplifies the signal output from the trans-impedance amplifier 76 and outputs the amplified signal with a constant amplitude to the outside of the optical transmission device 9.

In such an optical transmission device, since the optical power of the light-emitting element such as a laser diode deteriorates with the lapse of time and also varies with a variation in temperature, a variety of means has been employed to stabilize communications.
For example, in an optical transmission device disclosed in Patent Document 1, as shown in FIG. 25, an optical transmission unit 6B further includes a monitoring light-receiving element 63 such as a photo diode, a trans-impedance amplifier (TIA) 66, and a difference circuit 68 in addition to the driving circuit 67 and the light-emitting element 62. The monitoring light-receiving element 63 is disposed in the vicinity of the light-emitting element 62 and serves to receive part of the light output from the light-emitting element 62, to generate current corresponding to the received light intensity, and to output the generated current to the trans-impedance amplifier 66. The trans-impedance amplifier 66 converts the input current into a voltage, amplifies the voltage, and outputs the amplified voltage to the difference circuit 68. The voltage (received-light voltage) input to the difference circuit 68 is compared with a predetermined voltage by the difference circuit 68 and the difference voltage is output from the difference circuit 68.
In the optical transmission device having the configuration disclosed in Patent Document 1, the received light intensity sensed by the monitoring light-receiving element 63 is fed back and the driving current for driving the light-emitting element 62 is varied, whereby the emission intensity of the light-emitting element 62 is maintained in a stable state.

In an optical transmission device disclosed in Patent Document 2, as shown in FIG. 26, an optical transmission unit 6C further includes a temperature sensor 69 in addition to the driving circuit 67 and the light-emitting element 62. The temperature sensor 69 is disposed in the vicinity of the light-emitting element 62 so as to sense the temperature around the light-emitting element 62. The temperature sensor 69 compares the sensed temperature with information stored in advance to calculate a corrected current value, and changes the driving current based on the calculation result.
In the optical transmission device having this configuration disclosed in Patent Document 2, the emission intensity of the light-emitting element 62 is maintained in a stable state even when the temperature around the light-emitting element 62 varies.

In an optical transmission device disclosed in Patent Document 3, as shown in FIG. 27, an optical reception unit 7B includes a level detector 79 and a difference circuit 78 instead of the limiting amplifier 71. This is typically called an AGC (Auto Gain Control) circuit.
In the optical transmission device having this circuit configuration, the signal light intensity or the magnification factor of the trans-impedance amplifier 76 can be changed based on the received light intensity of the light-receiving element 73 sensed by the level detector 79, whereby the output signal to the outside can be maintained stable even when the received light intensity is changed.
[Patent Document 1] Japanese Unexamined Patent Application, First Publication No. 2005-012520
[Patent Document 2] Japanese Unexamined Patent Application, First Publication No. H10-041575
[Patent Document 3] Japanese Unexamined Patent Application, First Publication No. 2003-318681

### Disclosure of the Invention

### Problems to be Solved by the Invention

However, in the optical transmission device disclosed in Patent Document 1, when a photoelectric composite substrate mounted with the light-emitting element 62 is employed as the polymer waveguide which is the light-transmitting medium, there is a problem in that an area for mounting the monitoring light-receiving element 63 cannot be guaranteed. Even when such an area can be guaranteed, a trans-impedance amplifier is further necessary. As a result, there are problems in that the configuration of the optical transmission unit 6B is complicated, it is difficult to reduce the size of the device, and the cost increases.
In the optical transmission device disclosed in Patent Document 2, it is necessary to separately dispose the temperature sensor 69 in the optical transmission unit 6C, thereby causing an increase in cost. With the variation in emission intensity due to the temporal deterioration of the light-emitting element 62, there is a problem in that the communication cannot be stabilized.
In the optical transmission device disclosed in Patent Document 3, since an excessive gain should always be prepared to provide a wide dynamic range to the AGC circuit, there is a problem in that the power consumption is great. There are also problems in that the configuration of the optical reception unit 7B is complicated, it is difficult to reduce the size of the device, and the cost increases.
A decrease in size and cost is required for the optical transmission device applied to a relatively-short transmission distance within an apparatus or between apparatuses, and various restrictions are applied to the shape. However, in the above-mentioned known optical transmission devices, sufficient countermeasures against the above-mentioned problems have not been prepared.

The present invention is made in view of the above-mentioned situations. An object of the present invention is to provide an optical transmission device that can stably communicate while having a small size and a low cost.

### Technical Solution

The present invention employs the following configurations to solve the above-mentioned problems and to accomplish the object.
(1) An optical transmission device according to the present invention includes: an optical transmission unit including a light-emitting element; an optical reception unit including a static current source generating bias current for driving the light-emitting element; a light-transmitting medium optically connecting the light-emitting element and a light-receiving element to each other; and an electricity-transmitting medium transmitting the bias current from the static current source to the light-emitting element.
(2) Another optical transmission device according to the present invention includes: an optical transmission unit including a light-emitting element; an optical reception unit including a light-receiving element and a current source generating bias current for adjusting an optical power of the light-emitting element based on an electrical signal into which light received by the light-receiving element is converted; a light-transmitting medium optically connecting the light-emitting element and the light-receiving element to each other; and an electricity-transmitting medium transmitting the bias current from the current source to the light-emitting element.
(3) In the optical transmission device according to (2) above, the optical reception unit may further include an error detector measuring an intensity of the light received by the light-receiving element and controlling a magnitude of the bias current generated by the current source based on a measured value.
(4) In the optical transmission device according to (3) above, the optical reception unit may further include a low-pass filter disposed between the error detector and the current source.
(5) In the optical transmission device according to (3) above, the optical reception unit may further include a trans-impedance amplifier and a low-pass filter, and the light-receiving element, the trans-impedance amplifier, the low-pass filter, and the error detector may be disposed in this order.
(6) In the optical transmission device according to any one of (2) to (5) above, the optical reception unit may further include an average calculator calculating an average value of the intensity of the light received by the light-receiving element.
(7) In the optical transmission device according to any one of (1) to (6) above, the optical transmission unit may further include an impedance-matching element.
(8) In the optical transmission device according to any one of (1) to (7) above, the optical reception unit may further include an impedance-matching element.
(9) In the optical transmission device according to any one of (1) to (8) above, the optical transmission unit may further include a low-pass filter disposed between the electricity-transmitting medium and the light-emitting element.
(10) In the optical transmission device according to any one of (1) to (9) above, the optical transmission unit may receive a differential input signal as an input signal from an outside.
(11) In the optical transmission device according to any one of (1) to (10) above, the optical transmission unit may further include a protection circuit disposed between the electricity-transmitting medium and the light-emitting element.
(12) In the optical transmission device according to any one of (1) to (11) above, one of a photoelectric composite cable in which the light-transmitting medium and the electricity-transmitting medium are combined in a body, a photoelectric composite wiring board in which a light waveguide and the electricity-transmitting medium are disposed on a substrate, and a light waveguide coated with metal may be disposed as the light-transmitting medium and the electricity-transmitting medium.
(13) In the optical transmission device according to any one of (1) to (12) above, the optical transmission unit and the optical reception unit may each be air-tightly sealed by a conductive package, and the electricity-transmitting medium may be electrically connected between the package air-tightly sealing the optical transmission unit and the package air-tightly sealing the optical reception unit.
(14) In the optical transmission device according to any one of (1) to (11) above, the electricity-transmitting medium may transmit current wirelessly.

### Effects of the Invention

According to the optical transmission device described in (1) or (2) above, it is possible to reduce the size and cost of the optical transmission device and to reduce the power consumption.
By determining the emission intensity of the light-emitting element based on the received light intensity of the light-receiving element and performing a feedback control, it is possible to stabilize communications.

### Brief Description of the Drawings

FIG. 1 is a diagram schematically illustrating the configuration of an optical transmission device according to a first embodiment of the present invention.
FIG. 2 is a diagram schematically illustrating the configuration of an optical transmission device according to a second embodiment of the present invention.
FIG. 3 is a diagram schematically illustrating the configuration of an optical transmission device according to a third embodiment of the present invention.
FIG. 4 is a diagram schematically illustrating the configuration of an optical transmission device according to a fourth embodiment of the present invention.
FIG. 5 is a diagram schematically illustrating the configuration of an optical transmission device according to a fifth embodiment of the present invention.
FIG. 6 is a diagram schematically illustrating the configuration of an optical transmission device according to a ninth embodiment of the present invention.
FIG. 7 is a diagram schematically illustrating the configuration of an optical transmission device according to an eleventh embodiment of the present invention.
FIG. 8 is a diagram schematically illustrating the configuration of an optical transmission device according to a fifteenth embodiment of the present invention.
FIG. 9 is a diagram schematically illustrating the configuration of an optical transmission device according to a seventeenth embodiment of the present invention.
FIG. 10 is a diagram schematically illustrating the configuration of an optical transmission device according to a nineteenth embodiment of the present invention.
FIG. 11 is a diagram schematically illustrating the configuration of an optical transmission device according to a twenty-first embodiment of the present invention.
FIG. 12 is a diagram schematically illustrating the configuration of an optical transmission device according to a twenty-third embodiment of the present invention.
FIG. 13 is a diagram schematically illustrating the configuration of an optical transmission device according to a twenty-fifth embodiment of the present invention.
FIG. 14 is a diagram schematically illustrating the configuration of an optical transmission device according to a twenty-seventh embodiment of the present invention.
FIG. 15 is a diagram schematically illustrating the configuration of an optical transmission device according to a twenty-eighth embodiment of the present invention.
FIG. 16 is a diagram schematically illustrating the configuration of an optical transmission device according to a twenty-ninth embodiment of the present invention.
FIG. 17 is a diagram schematically illustrating the configuration of an optical transmission device according to a thirtieth embodiment of the present invention.
FIG. 18 is a diagram schematically illustrating the configuration of an optical transmission device in which communications are stabilized by making a feedback control by bidirectional communication.
FIG. 19 is a diagram schematically illustrating the configuration of another optical transmission device in which communications are stabilized by making a feedback control by bidirectional communication.
FIG. 20 is a diagram schematically illustrating the configuration of another optical transmission device in which communications are stabilized by making a feedback control by bidirectional communication.
FIG. 21 is a diagram schematically illustrating the configuration of another optical transmission device in which communications are stabilized by making a feedback control by bidirectional communication.
FIG. 22 is a diagram schematically illustrating the configuration of an optical transmission device transmitting a large amount of data by parallel communication.
FIG. 23 is a diagram schematically illustrating the configuration of another optical transmission device transmitting a large amount of data by parallel communication.
FIG. 24 is a diagram schematically illustrating the configuration of a known optical transmission device.
FIG. 25 is a diagram schematically illustrating the configuration of an optical transmission unit in another known optical transmission device.

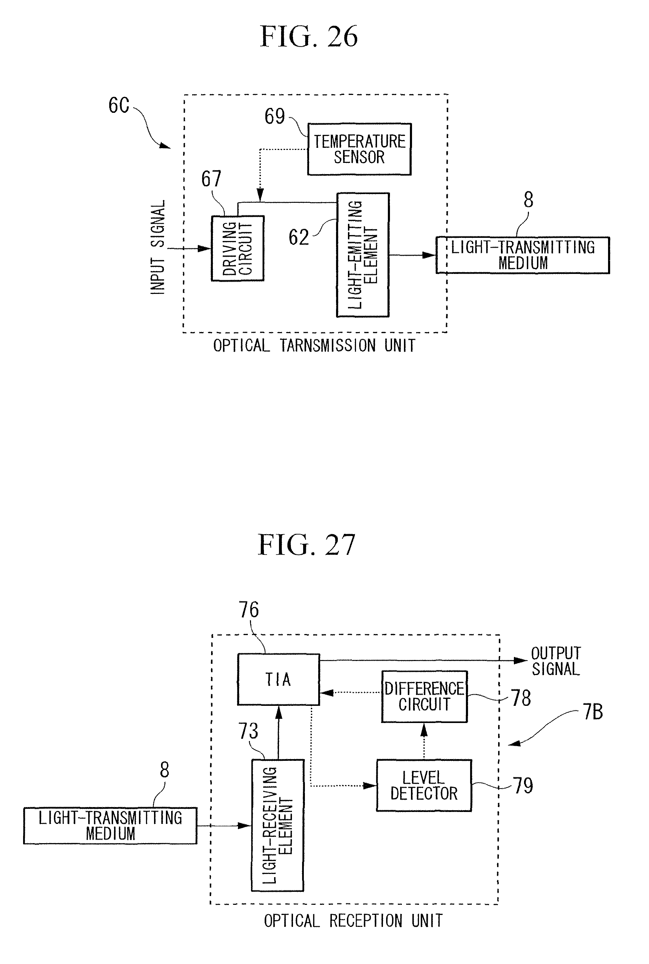

FIG. 26 is a diagram schematically illustrating the configuration of an optical transmission unit in another known optical transmission device.
FIG. 27 is a diagram schematically illustrating the configuration of an optical reception unit in another known optical transmission device.

### Brief Description of the Reference Symbols

- 1, 1A:: OPTICAL TRANSMISSION UNIT
- 12:: LIGHT-EMITTING ELEMENT
- 2, 2A:: OPTICAL RECEPTION UNIT
- 17, 27:: IMPEDANCE-MATCHING ELEMENT
- 21:: LOW-PASS FILTER
- 23:: LIGHT-RECEIVING ELEMENT
- 24:: CURRENT SOURCE
- 25:: AVERAGE CALCULATOR
- 26:: TRANS-IMPEDANCE AMPLIFIER
- 28:: ERROR DETECTOR
- 29:: STATIC CURRENT SOURCE
- 3:: LIGHT-TRANSMITTING MEDIUM
- 31:: ELECTRICITY-TRANSMITTING MEDIUM
- 5, 5A:: OPTICAL TRANSMISSION DEVICE
- 90,91:: PACKAGE

### Best Mode for Carrying out the Invention

Hereinafter, embodiments of the present invention will be described in detail with reference to the accompanying drawings.

### First Embodiment

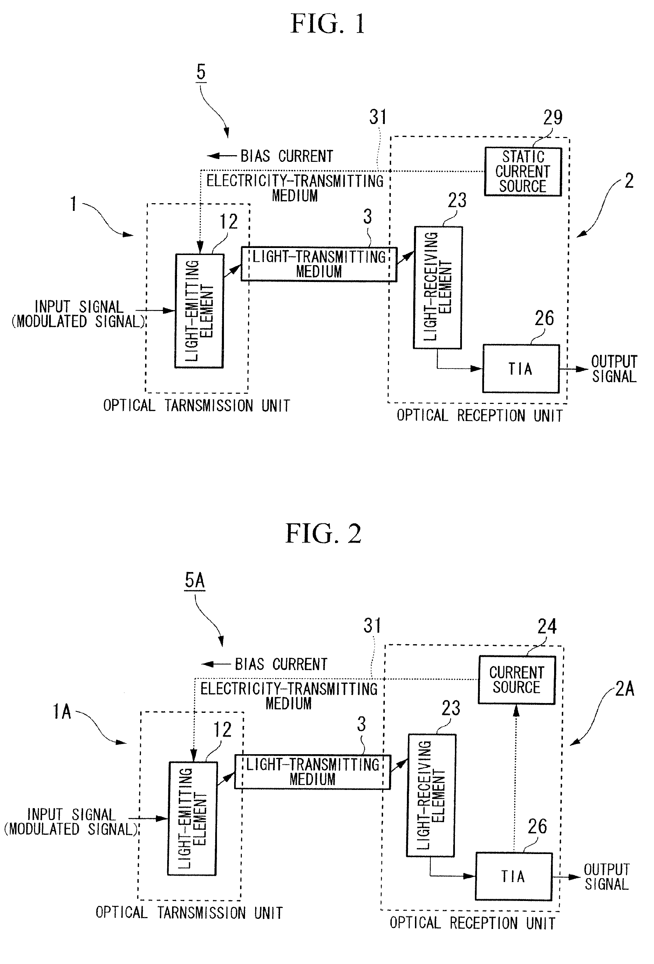

FIG. 1 is a diagram schematically illustrating the configuration of an optical transmission device according to a first embodiment of the present invention. The optical transmission device 5 according to this embodiment includes an optical transmission unit 1 having a light-emitting element 12, an optical reception unit 2 having a light-receiving element 23, and a light-transmitting medium 3 optically connecting the light-emitting element 12 and the light-receiving element 23 to each other.
The optical reception unit 2 includes a static current source 29 generating bias current for driving the light-emitting element 12 of the optical transmission unit 1.
The optical transmission device 5 further includes an electricity-transmitting medium 31 transmitting the bias current from the static current source 29 to the light-emitting element 12.

The light-emitting element 12 may employ a known one and a specific example thereof may be a laser diode. The light-receiving element 23 may employ a known one and a specific example thereof may be a photo diode.
An optical-communication light waveguide such as an optical fiber or a substrate-type light waveguide can be used as the light-transmitting medium 3.
Examples of the electricity-transmitting medium 31 include an electricity-transmitting medium for transmitting current in a wired manner as shown in the drawing and an electricity-transmitting medium for transmitting current in a wireless manner. These may all be known.

The optical transmission unit 1 receives a modulated signal from the outside and drives the light-emitting element 12. A burst signal and a continuous signal can be selectively used as the modulated signal.
When an optical signal is transmitted from the light-emitting element 12 to the light-receiving element 23 of the optical reception unit 2 via the light-transmitting medium 3, current based on the received light intensity is generated by the light-receiving element 23. This current is converted into a voltage and amplified, for example, by a trans-impedance amplifier (hereinafter, abbreviated as "TIA") 26. Power for controlling the TIA 26 is supplied from the outside, although not shown herein.
The static current source 29 generates predetermined current. This current is transmitted to the light-emitting element 12 of the optical transmission unit 1 via the electricity-transmitting medium 31 and is used as bias current for driving the light-emitting element 12. In this way, the light-emitting element 12 is driven with the external modulated signal and the bias current.
The solid arrow in FIG. 1 indicates a flow of the signal for transmitting information and the dotted arrow indicates a flow of the bias current flowing from the optical reception unit 2 to the optical transmission unit 1.

The optical transmission device 5 according to this embodiment is different from a known one and can maintain the optical power of the light-emitting element 12 at a level with which it can stably communicate for a long term by setting the current generated by the static current source 29 to a proper value, even when the monitoring light-receiving element, the temperature sensor, the AGC circuit, and the like are not particularly disposed in the vicinity of the light-emitting element 12 of the optical transmission unit 1 or when the limiting amplifier is not mounted on the optical reception unit 2. The driving circuit which was disposed in the optical transmission unit 1 in the past is unnecessary.

### Second Embodiment

FIG. 2 is a diagram schematically illustrating the configuration of an optical transmission device according to a second embodiment of the present invention. Like elements described in the first embodiment are denoted by the same reference numerals and signs and description thereof is not repeated. In an optical transmission device 5A according to this embodiment, an optical transmission unit 1A is provided as the configuration corresponding to the optical transmission unit 1 in the first embodiment and an optical reception unit 2A is provided as the configuration corresponding to the optical reception unit 2.
In the optical transmission device 5A shown in FIG. 2, a variable current source 24 is provided instead of the fixed static current source 29 in the first embodiment, the current source 24 and the TIA 26 are electrically connected to each other, and a voltage signal is transmitted from the TIA 26 to the current source 24.
The current source 24 generates current of an optimal value corresponding to a predetermined voltage signal based on the voltage signal output from the TIA 26. This current is transmitted to the light-emitting element 12 of the optical transmission unit 1A via the electricity-transmitting medium 31 and is used as bias current for driving the light-emitting element 12.

In the optical transmission device 5A according to this embodiment, since the optical driving current is supplied to the light-emitting element 12 based on the intensity of the light received by the light-receiving element 23, it is possible to maintain the optical power of the light-emitting element 12 at an appropriate value. Since the value of the driving current is changed depending on the magnitude of the received light intensity, excessive current is not supplied and it is possible to effectively reduce the power consumption.

### Third Embodiment

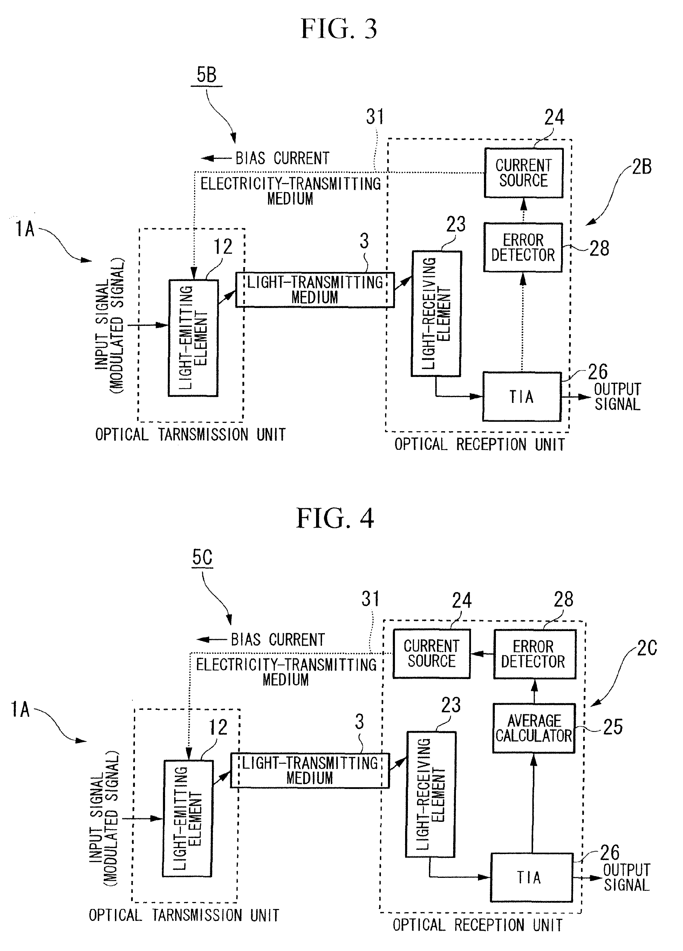

FIG. 3 is a diagram schematically illustrating the configuration of an optical transmission device according to a third embodiment of the present invention. Like elements described in the second embodiment are denoted by the same reference numerals and signs and description thereof is not repeated. In an optical transmission device 5B according to this embodiment, an optical reception unit 2B is provided as the configuration corresponding to the optical reception unit 2A in the second embodiment.
In the optical transmission device 5B shown in FIG. 3, an error detector 28 is disposed in the optical reception unit 2A in the second embodiment.
The error detector 28 measures the intensity (received light intensity) of the light received by the light-receiving element 23, calculates an error value between the received light intensity and reference intensity, and controls the magnitude of the bias current supplied from the current source 24 based on the error value. The error detector 28 may be set to regularly measure the received light intensity.

In the optical transmission device 5B according to this embodiment, since the driving current of the light-emitting element 12 is controlled so as to keep the received light intensity of the light-receiving element 23 constant, it is possible to stably communicate for a long term. Even when characteristics of at least one of the light-emitting element 12 and the light-receiving element 23 varies with the variation in ambient temperature of the light-emitting element 12 or the light-receiving element 23, it is possible to keep the voltage in the TIA 26 constant.

### Fourth Embodiment

FIG. 4 is a diagram schematically illustrating the configuration of an optical transmission device according to a fourth embodiment of the present invention. Like elements described in the third embodiment are denoted by the same reference numerals and signs and description thereof is not repeated. In an optical transmission device 5C according to this embodiment, an optical reception unit 2C is provided as the configuration corresponding to the optical reception unit 2B in the third embodiment.
In the optical transmission device 5C shown in FIG. 4, an average calculator 25 is disposed between the TIA 26 of the optical reception unit 2B and the error detector 28 in the third embodiment.
The average calculator 25 measures the intensity of the light received by the light-emitting element 23, calculates the average, and outputs the calculated average. The average calculator 25 can be set to regularly measure the received light intensity.

In the optical transmission device 5C according to this embodiment, since the average of the received light intensity of the light-receiving element 23 is acquired, it is possible to measure the received light intensity stably not depending on the existence of a modulated signal or the magnitude of a modulation speed. Accordingly, it is possible to improve the stability of the emission intensity of the light-emitting element 12.

### Fifth Embodiment

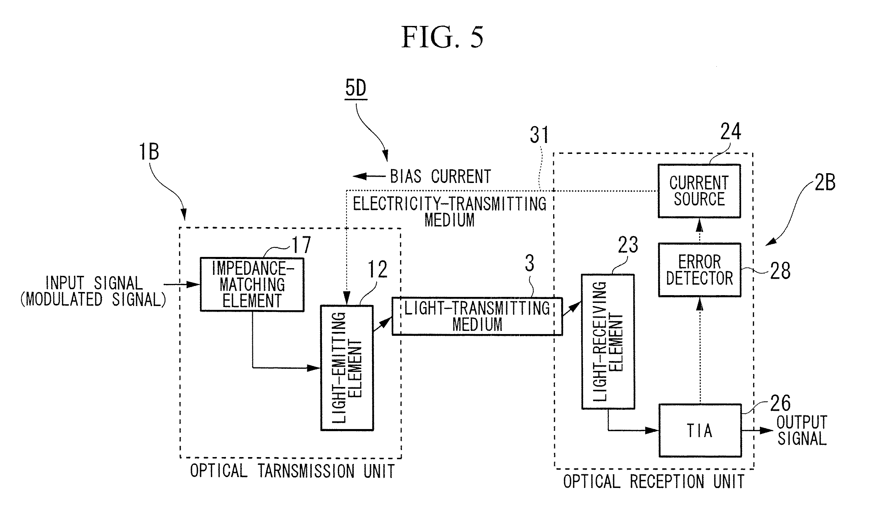

FIG. 5 is a diagram schematically illustrating the configuration of an optical transmission device according to a fifth embodiment of the present invention. Like elements described in the third embodiment are denoted by the same reference numerals and signs and description thereof is not repeated. In an optical transmission device 5D according to this embodiment, an optical transmission unit 1 B is provided as the configuration corresponding to the optical transmission unit 1 A in the third embodiment.
In the optical transmission device 5D shown in FIG. 5, an impedance-matching element 17 is disposed in the path through which the input signal is received by the optical transmission unit 1A in the third embodiment.
The impedance-matching element 17 is of a fixed type. An element in which resistors are disposed in multi stages and multiple resistors are connected in parallel in accordance with desired impedance can be exemplified as the fixed impedance-matching element 17. An element not including resistors may be employed as long as it can change the impedance.

In the optical transmission device 5D according to this embodiment, the waveform deterioration of the optical signal from the light-emitting element 12 is suppressed, thereby preventing the characteristic deterioration due to the impedance difference of the light-emitting element 12 or the optical transmission unit 1B. It is also possible to cope with the variation in impedance of the substrate connected to the optical transmission unit 1B.
Although the optical transmission device 5D including the error detector 28 has been described in this embodiment, the same advantageous effects can be obtained without disposing the error detector 28 in the optical reception unit 2B, when the impedance-matching element 17 is disposed in the optical transmission unit 1B.

### Sixth Embodiment

In an optical transmission device according to a sixth embodiment, an impedance-matching element is disposed in the path through which the input signal is received by the optical transmission unit 1A in the fourth embodiment, but is not shown.
The impedance-matching element is of a fixed type. An element in which resistors are disposed in multi stages and multiple resistors are connected in parallel in accordance with desired impedance can be exemplified as the fixed impedance-matching element 17. An element not including resistors may be employed as long as it can change the impedance.
In the optical transmission device according to this embodiment, the waveform deterioration of the optical signal from the light-emitting element 12 is suppressed, thereby preventing the characteristic deterioration due to the impedance difference of the light-emitting element 12 or the optical transmission unit 1A. It is also possible to cope with the variation in impedance of the substrate connected to the optical transmission unit 1A. Since the average calculator 25 and the impedance-matching element are used together, it is possible to stabilize both the DC component and the modulated component of the optical signal and to guarantee excellent communication quality for a long term.

### Seventh Embodiment

In an optical transmission device according to a seventh embodiment, a variable impedance-matching element is provided instead of the fixed impedance-matching element 17 in the fifth embodiment, but is not shown. An element controlling the impedance using a voltage or the like can be exemplified as the variable impedance-matching element, but the variable impedance-matching element is not limited to this element, as long as it can change the impedance.
In this embodiment, similarly to the fifth embodiment, it is possible to obtain the same advantageous effect, even when the error detector 28 is not disposed.
In the optical transmission device according to this embodiment, the impedance can be optimally controlled with the variation in the modulated signal input to the optical transmission unit 1B. It is also possible to suppress the characteristic deterioration due to uneven impedance of components at the time of mounting the components.

### Eighth Embodiment

In an optical transmission device according to an eighth embodiment, a variable impedance-matching element is provided instead of the fixed impedance-matching element 17 in the sixth embodiment, but is not shown. An element controlling the impedance using a voltage or the like can be exemplified as the variable impedance-matching element, but the variable impedance-matching element is not limited to this element, as long as it can change the impedance.
In the optical transmission device according to this embodiment, the impedance can be optimally controlled with the variation in the modulated signal input to the optical transmission unit 1A. It is also possible to suppress the characteristic deterioration due to uneven impedance of components at the time of mounting the components. In addition, since the average calculator and the impedance-matching element 27 are used together, it is possible to stabilize both the DC component and the modulated component of the optical signal and to guarantee excellent communication quality for a long term.

It is stated in the fifth to eighth embodiments that the impedance-matching element is disposed in the path through which the input signal is received by the optical transmission unit 1A to 1C, but the first embodiment may employ the similar configuration. That is, although not shown, the impedance-matching element may be disposed in the path through which the input signal is received by the optical transmission unit 1 in the first embodiment. As described above, a fixed type or a variable type may be used as the impedance-matching element.

### Ninth Embodiment

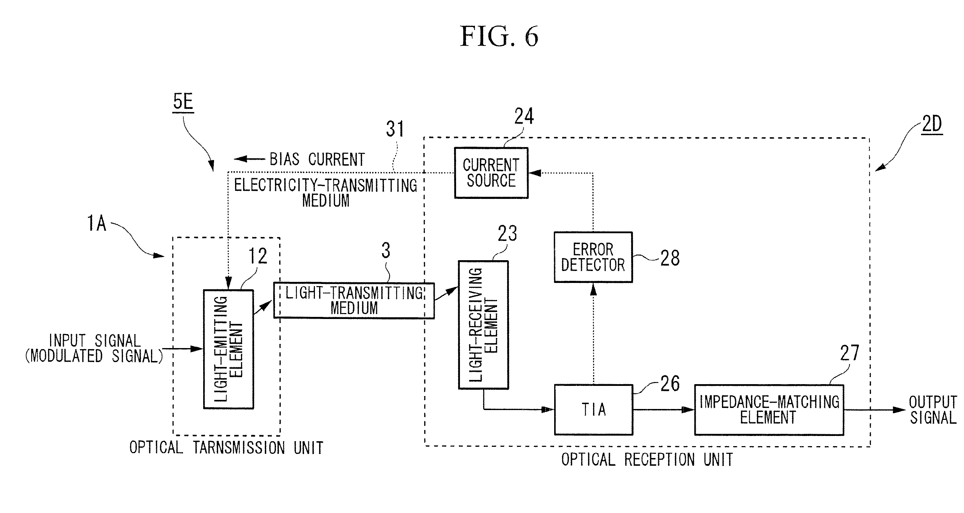

FIG. 6 is a diagram schematically illustrating the configuration of an optical transmission device according to a ninth embodiment of the present invention. Like elements described in the third embodiment are denoted by the same reference numerals and signs and description thereof is not repeated. In an optical transmission device 5E according to this embodiment, an optical reception unit 2D is provided as the configuration corresponding to the optical reception unit 2B in the third embodiment.
The optical transmission device 5E shown in FIG. 6 has a configuration in which the optical reception unit 2B in the third embodiment includes an impedance-matching element 27.
The impedance-matching element 27 is of a fixed type and is similar to the fixed impedance-matching element 17 in the fifth embodiment.

In the optical transmission device 5E according to this embodiment, the waveform deterioration of the optical signal from the light-emitting element 12 is suppressed, thereby preventing the characteristic deterioration due to the impedance difference of the components used in the optical reception unit 2D, such as the TIA 26. It is also possible to cope with the variation in impedance of the substrate connected to the optical reception unit 2D.
Here, the example where the error detector 28 is disposed is described, but the same advantageous effects can be obtained without disposing the error detector 28.

### Tenth Embodiment

In an optical transmission device according to a tenth embodiment of the present invention, a variable impedance-matching element is provided instead of the fixed impedance-matching element 27 in the ninth embodiment, but is not shown. Like elements described in the seventh embodiment may be employed as the variable impedance-matching element.
In this embodiment, similarly to the ninth embodiment, the same advantageous effects can be obtained without disposing the error detector 28.
According to this embodiment, the impedance can be optimally controlled with the variation in the modulated signal transmitted from the optical transmission unit 1A. It is also possible to suppress the characteristic deterioration due to uneven impedance of components at the time of mounting the components.

It is stated in the ninth and tenth embodiments that the impedance-matching element 27 is disposed in the subsequent stage of the TIA 26 in the optical reception unit 2D, but the first embodiment may employ the same configuration. That is, although not shown here, the impedance-matching element 27 may be disposed in the subsequent stage of the TIA 26 in the optical reception unit 2 in the first embodiment. Similarly to the ninth and tenth embodiments, a fixed type or a variable type can be used as the impedance-matching element 27.

### Eleventh Embodiment

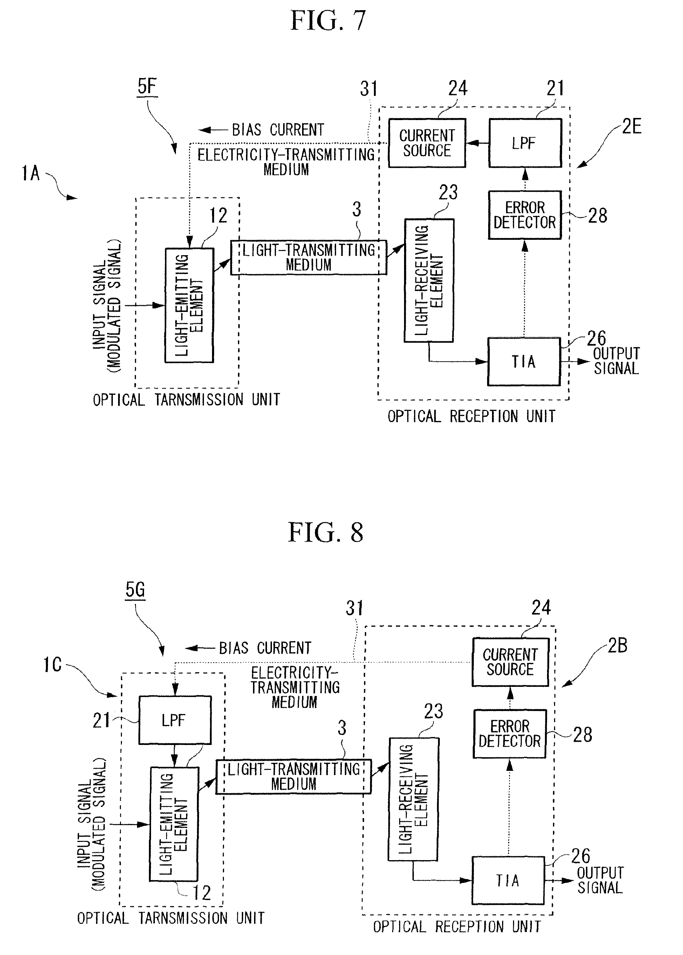

FIG. 7 is a diagram schematically illustrating the configuration of an optical transmission device according to an eleventh embodiment of the present invention. Like elements described in the third embodiment are denoted by the same reference numerals and signs and description thereof is not repeated. In an optical transmission device 5F according to this embodiment, an optical reception unit 2E is provided as the configuration corresponding to the optical reception unit 2B in the third embodiment.
In the optical transmission device 5F, a low-pass filter (hereinafter, also abbreviated as "LPF") 21 is disposed between the error detector 28 and the current source 24 in the third embodiment.

In the optical transmission device 5F according to this embodiment, a high-frequency electrical signal transmitted as the modulated signal can be blocked and only a low-frequency electrical signal can be transmitted by the LPF 21, and the low-frequency electrical signal can be transmitted from the current source 24 to the light-emitting element 12. Accordingly, it is possible to make a stable communication with a low amount of noise, thereby improving the stability in emission intensity of the light-emitting element 12. As described later, compared with a case where the optical transmission unit 1A includes the low-pass filter, high-frequency current does not flow in the electricity-transmitting medium 31 (in the electricity-transmitting medium) in this embodiment. Accordingly, it is possible to prevent the generation of noise causing a bad influence on other devices.
Here, the example where the error detector 28 is disposed is described, but the same advantageous effects can be obtained without disposing the error detector 28.

### Twelfth Embodiment

In an optical transmission device according to a twelfth embodiment of the present invention, an LPF is disposed between the error detector 28 and the current source 24 in the fourth embodiment, but is not shown.
In the optical transmission device according to this embodiment, the frequency of a high-frequency electrical signal is sufficiently lowered by the average calculator 25, only the low-frequency electrical signal is transmitted by the LPF, and the low-frequency electrical signal can be transmitted from the current source 24 to the light-emitting element 12. Accordingly, it is possible to make a stable communication with a smaller noise, thereby improving the stability in emission intensity of the light-emitting element 12.

### Thirteenth Embodiment

In an optical transmission device according to a thirteenth embodiment of the present invention, the LPF 21 is disposed between the TIA 26 and the error detector 28 instead of between the error detector 28 and the current source 24 in the eleventh embodiment, but is not shown. That is, in the optical reception unit 2E, the light-receiving element 23, the TIA 26, the LPF 21, and the error detector 28 are arranged in this order.
In the optical transmission device according to this embodiment, similarly to the eleventh embodiment, the same advantageous effects can be obtained without disposing the error detector 28.

### Fourteenth Embodiment

In an optical transmission device according to a fourteenth embodiment of the present invention, the LPF is disposed between the average calculator 25 and the error detector 28 instead of between the error detector 28 and the current source 24 in the twelfth embodiment, but is not shown. That is, in the optical reception unit 2C, the light-receiving element 23, the TIA 26, the average calculator 25, the LPF 21, and the error detector 28 are arranged in this order.
In the optical transmission device according to this embodiment, the same advantageous effects as the twelfth embodiment.

### Fifteenth Embodiment

FIG. 8 is a diagram schematically illustrating the configuration of an optical transmission device according to a fifteenth embodiment of the present invention. Like elements described in the third embodiment are denoted by the same reference numerals and signs and description thereof is not repeated. In an optical transmission device 5F according to this embodiment, an optical reception unit 1C is provided as the configuration corresponding to the optical transmission unit 1A in the third embodiment.
In the optical transmission device 5G, an LPF 21 is disposed between the electricity-transmitting medium 31 and the light-emitting element 12 in the optical transmission unit 1 C according to the third embodiment.
In the optical transmission device 5G according to this embodiment, a high-frequency electrical signal transmitted as the modulated signal can be blocked and only a low-frequency electrical signal can be transmitted from the current source 24 to the light-emitting element 12 in the optical transmission unit 1C by the LPF 21. Accordingly, it is possible to make a stable communication with a low amount of noise, thereby improving the stability in emission intensity of the light-emitting element 12.
In this embodiment, the same advantageous effects can be obtained without disposing the error detector 28.

### Sixteenth Embodiment

In an optical transmission device according to a sixteenth embodiment of the present invention, the LPF is disposed between the electricity-transmitting medium 31 and the light-emitting element 12 in the optical transmission unit 1A in the fourth embodiment, but is not shown.
In the optical transmission device according to this embodiment, the frequency of a high-frequency electrical signal is sufficiently lowered by the average calculator 25, only the low-frequency electrical signal is transmitted by the LPF, and the low-frequency electrical signal can be transmitted from the current source 24 to the light-emitting element 12 in the optical transmission unit 1A. Accordingly, it is possible to make a stable communication with a low amount of noise, thereby improving the stability in emission intensity of the light-emitting element 12.

In the fifteenth and sixteenth embodiments, it is stated that the LPF is disposed between the electricity-transmitting medium 31 and the light-emitting element 12, but the first embodiment may employ the same configuration. That is, although not shown here, the LPF may be disposed between the electricity-transmitting medium 31 and the light-emitting element 12 in the optical transmission unit 1 in the first embodiment. In this case, the high-frequency electrical signal transmitted as the modulated signal can be blocked and only the low-frequency electrical signal can be transmitted from the static current source 29 to the light-emitting element 12 in the optical transmission unit 1.

### Seventeenth Embodiment

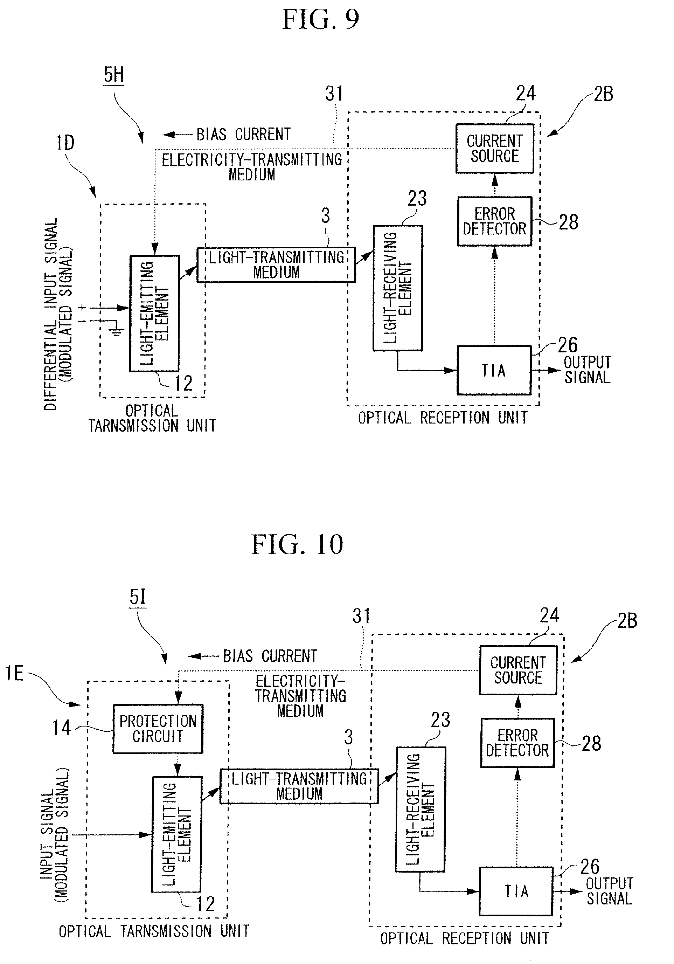

FIG. 9 is a diagram schematically illustrating the configuration of an optical transmission device according to a seventeenth embodiment of the present invention. Like elements described in the third embodiment are denoted by the same reference numerals and signs and description thereof is not repeated. In an optical transmission device 5H according to this embodiment, an optical transmission unit 1D is provided as the configuration corresponding to the optical transmission unit 1A in the third embodiment.
The optical transmission device 5H has a configuration in which the external input signal to the optical transmission unit 1D is a differential input signal in the third embodiment.
The differential input signal input to the optical transmission unit 1D may employ known signals and a preferable example thereof is an LIDS (Low Voltage Differential Signaling) signal.
In the optical transmission device 5H according to this embodiment, it is possible to make a communication resistant to a noise by using the differential input signal.

### Eighteenth Embodiment

An optical transmission device according to an eighteenth embodiment of the present invention has a configuration in which the external input signal to the optical transmission unit 1 A in the fourth embodiment is a differential input signal, but is not shown.
In the optical transmission device according to this embodiment, it is possible to make a communication resistant to a noise by using the differential input signal.

In the seventeenth and eighteenth embodiments, it is stated that the external input signal to the optical transmission unit 1A is the differential input signal, but the first embodiment may similarly have the configuration in which the external input signal to the optical transmission unit 1 is the differential input signal (not shown). The differential input signal is the same as described in the seventeenth and eighteenth embodiments and the same advantageous effects can be obtained.

### Nineteenth Embodiment

FIG. 10 is a diagram schematically illustrating the configuration of an optical transmission device according to a nineteenth embodiment of the present invention. Like elements described in the third embodiment are denoted by the same reference numerals and signs and description thereof is not repeated. In an optical transmission device 51 according to this embodiment, an optical reception unit 1E is provided as the configuration corresponding to the optical transmission unit 1A in the third embodiment.
In the optical transmission device 51, a protection circuit 14 is disposed between the electricity-transmitting medium 31 and the light-emitting element 12 in the optical transmission unit 1E according to the third embodiment.
In the optical transmission device 51 according to this embodiment, even when a current signal for driving the light-emitting element 12 in the optical transmission unit 1E rapidly varies, the light-emitting element 12 can be protected by the protection circuit 14, thereby improving long-term reliability of communications.

### Twentieth Embodiment

In an optical transmission device according to a twentieth embodiment of the present invention, a protection circuit is disposed between the electricity-transmitting medium 31 and the light-emitting element 12 in the optical transmission unit 1A in the fourth embodiment, but is not shown.
In the optical transmission device according to this embodiment, even when a current signal for driving the light-emitting element 12 in the optical transmission unit 1A rapidly varies, the light-emitting element 12 can be protected by the protection circuit 14, thereby improving the long-term reliability of communications.

In the nineteenth and twentieth embodiments, it is stated that the protection circuit (the protection circuit 14) is disposed between the electricity-transmitting medium 31 and the light-emitting element 12 in the optical transmission unit 1A, but the first embodiment may employ the same configuration. That is, although not shown here, the protection circuit may be disposed between the electricity-transmitting medium 31 and the light-emitting element 12 in the optical transmission unit 1 in the first embodiment.

### Twenty-first Embodiment

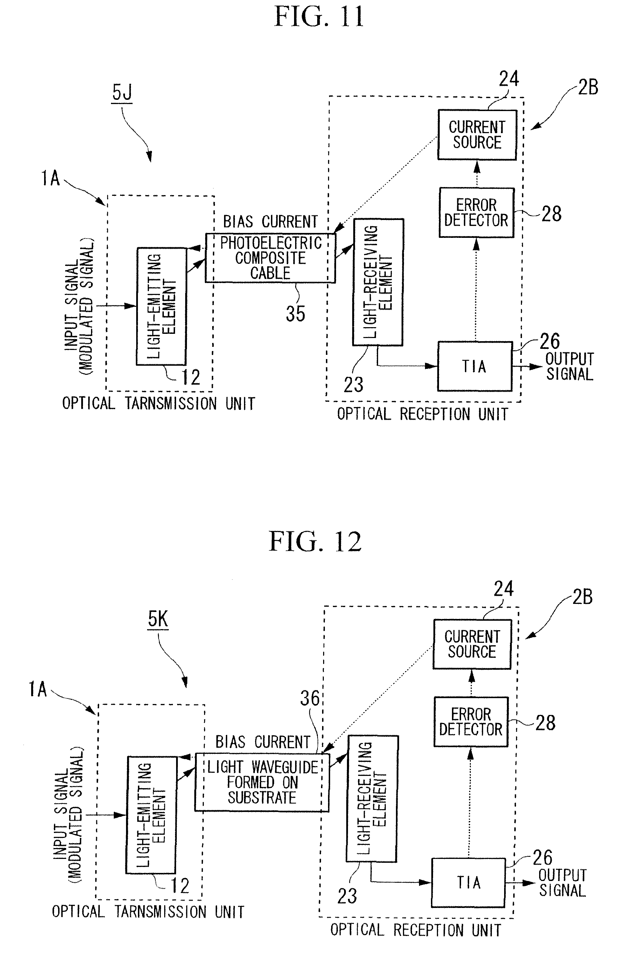

FIG. 11 is a diagram schematically illustrating the configuration of an optical transmission device according to a twenty-first embodiment of the present invention. Like elements described in the third embodiment are denoted by the same reference numerals and signs and description thereof is not repeated.
In the optical transmission device 5J according to this embodiment, instead of the light-transmitting medium 3 and the electricity-transmitting medium 31 in the third embodiment, a photoelectric composite cable 35 in which they are formed in a body is provided.
A cable in which an optical fiber as the light-transmitting medium and an electrical wire as the electricity-transmitting medium are combined can be exemplified as the photoelectric composite cable 35.
In the optical transmission device 5J according to this embodiment, since the light-emitting element 12 is coupled to the light-receiving element 23 and the current source 24 by a single medium, it is possible to improve the handleability and to reduce the mounting cost.
In this embodiment, the same advantageous effects can be obtained without disposing the error detector 28.

### Twenty-second Embodiment

An optical transmission device according to a twenty-second embodiment of the present invention has a configuration, which is not shown, in which a photoelectric composite cable in which these are formed in a body is provided instead of the light-transmitting medium 3 and the electricity-transmitting medium 31 in the fourth embodiment.
An example of the photoelectric composite cable is the same as described in the twenty-first embodiment.
In the optical transmission device according to this embodiment, it is possible to improve the handleability and to reduce the mounting cost.

### Twenty-third Embodiment

FIG 12 is a diagram schematically illustrating the configuration of an optical transmission device according to a twenty-third embodiment of the present invention. Like elements described in the third embodiment are denoted by the same reference numerals and signs and description thereof is not repeated.
In the optical transmission device 5K according to this embodiment, a photoelectric composite wiring board 36 in which a light waveguide and the electricity-transmitting medium are disposed on a substrate is provided instead of the light-transmitting medium 3 and the electricity-transmitting medium 31 in the third embodiment.
A substrate in which a light waveguide as the light-transmitting medium is disposed on a substrate having an electrical wire as the electricity-transmitting medium formed therein can be exemplified as the photoelectric composite wiring board 36. The light waveguide is not particularly limited and examples thereof include an optical fiber containing glass or plastics as a main component, a dielectric, a semiconductor, and a polymer.
In the optical transmission device 5K according to this embodiment, since the light-emitting element 12 is coupled to the light-receiving element 23 and the current source 24 by a single medium, it is possible to improve the handleability and to reduce the mounting cost.
In this embodiment, the same advantageous effects can be obtained even without disposing the error detector 28.

### Twenty-fourth Embodiment

An optical transmission device according to a twenty-fourth embodiment of the present invention has a configuration, which is not shown, in which a photoelectric composite wiring board in which a light waveguide and the electricity-transmitting medium are formed on a substrate is provided as the light-transmitting medium 3 and the electricity-transmitting medium 31 in the fourth embodiment.
An example of the photoelectric composite wiring board is the same as described in the twenty-third embodiment.
In the optical transmission device according to this embodiment, it is possible to improve the handleability and to reduce the mounting cost.

### Twenty-fifth Embodiment

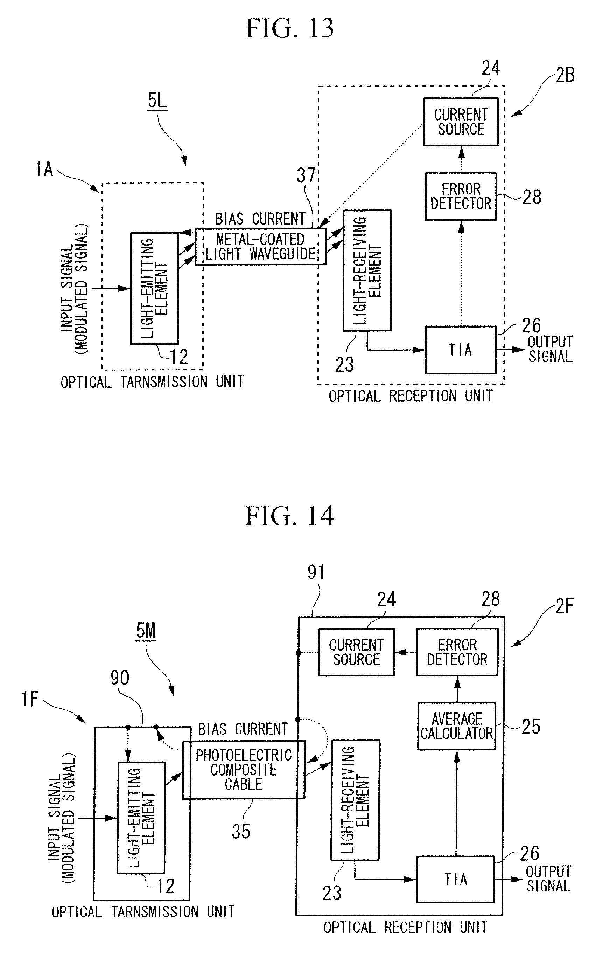

FIG. 13 is a diagram schematically illustrating the configuration of an optical transmission device according to a twenty-fifth embodiment of the present invention. Like elements described in the third embodiment are denoted by the same reference numerals and signs and description thereof is not repeated.
In the optical transmission device 5L according to this embodiment, a light waveguide 37 coated with metal is provided instead of the light-transmitting medium 3 and the electricity-transmitting medium 31 in the third embodiment.
An example in which an optical fiber as the light-transmitting medium is coated with metal as the electricity-transmitting medium can be used as the light waveguide 37 coated with metal. However, the light-transmitting medium may employ a material other than the optical fiber and the metal is not particularly limited as long as it has excellent electrical conductivity.
In the optical transmission device 5L according to this embodiment, since the light-emitting element 12 is coupled to the light-receiving element 23 and the current source 24 by a single medium, it is possible to improve the handleability and to reduce the mounting cost. For example, since the optical fiber coated with metal is hardly changed in shape and is hardly bent at the time of mounting unlike a normal optical fiber, it is possible to stably position the optical fiber. Accordingly, the optical transmission device 5L according to this embodiment is advantageous for mass production or cost reduction.

### Twenty-sixth Embodiment

An optical transmission device according to a twenty-sixth embodiment of the present invention has a configuration, which is not shown, in which a light waveguide coated with metal is employed instead of the light-transmitting medium 3 and the electricity-transmitting medium 31 in the fourth embodiment.
An example of the light waveguide coated with metal is the same as described in the twenty-fifth embodiment.
In the optical transmission device according to this embodiment, it is possible to improve the handleability and to reduce the mounting cost. For example, since the optical fiber coated with metal is hardly changed in shape and is hardly bent at the time of mounting unlike a normal optical fiber, it is possible to stably position the optical fiber. Accordingly, the optical transmission device according to this embodiment is advantageous for mass production or cost reduction.

In the twenty-first to twenty-sixth embodiments, the configuration, instead of the light-transmitting medium 3 and the electricity-transmitting medium 31, having the photoelectric composite cable in which they are formed in a body, the photoelectric composite wiring board in which the light waveguide and the electricity-transmitting medium are disposed on a substrate, or the light waveguide coated with metal is stated, but the first embodiment may have the same configuration. In this case, the light-emitting element 12 may be coupled to the light-receiving element 23 and the static current source 29 by a single medium. In this case, the same advantageous effects as described in the twenty-first to twenty-sixth embodiments can be obtained.

### Twenty-seventh Embodiment

FIG. 14 is a diagram schematically illustrating the configuration of an optical transmission device according to a twenty-seventh embodiment of the present invention. In the optical transmission device 5M shown in the drawing, the optical transmission unit 1F and the optical reception unit 2F in the twenty-second embodiment are air-tightly sealed by packages 90 and 91 of which at least part has conductivity, respectively. The current source 24, the electricity-transmitting medium, and the light-emitting element 12 are electrically connected to each other via the packages 90 and 91. Specifically, the optical transmission unit I F is air-tightly sealed by the package 90 of which at least part has conductivity and the optical reception unit 2F is air-tightly sealed by the package 91 of which at least part has conductivity. The electricity-transmitting medium in the photoelectric composite cable 35 is electrically connected to the light-emitting element 12 in the optical transmission unit 1F via the package 90. The electricity-transmitting medium is electrically connected to the current source 24 in the optical reception unit 2F via the package 91.
A specific example of the packages 90 and 91 is a package of which at least part is formed of metal, but the main material is not particularly limited. Examples thereof include iron, noniron metal, and precious metal. In some applications, a package formed by coating a resin with metal may be used. A resin package having conductivity may be used.

In the optical transmission device 5M according to this embodiment, since the bias current is transmitted from the optical reception unit 2F to the optical transmission unit 1F via the packages 90 and 91 and the electricity-transmitting medium, a dedicated wiring pattern for supplying the bias current need not be disposed between the optical reception unit 2F and the optical transmission unit 1F, thereby reducing the size of the optical transmission device 5M.
Although the optical transmission device having the average calculator 25 is stated in this embodiment, the same advantageous effects can be obtained even without disposing the average calculator 25. The same advantageous effects can be obtained even without disposing both the error detector 28 and the average calculator 25.

### Twenty-eighth Embodiment

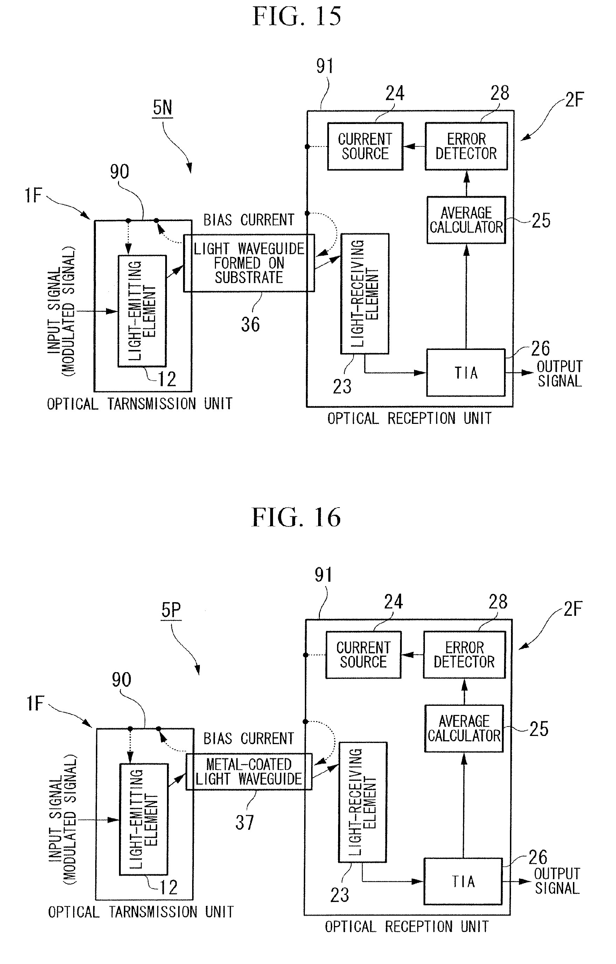

FIG. 15 is a diagram schematically illustrating the configuration of an optical transmission device according to a twenty-eighth embodiment of the present invention.
In the optical transmission device 5N shown in the drawing, the optical transmission unit 1F and the optical reception unit 2F in the twenty-fourth embodiment are air-tightly sealed by packages 90 and 91 of which at least part has conductivity, respectively. The current source 24, the electricity-transmitting medium, and the light-emitting element 12 are electrically connected to each other via the packages 90 and 91. Specifically, the optical transmission unit 1F is air-tightly sealed by the package 90 of which at least part has conductivity and the optical reception unit 2F is air-tightly sealed by the package 91 of which at least part has conductivity. The electricity-transmitting medium in the photoelectric composite wiring board 36 is electrically connected to the light-emitting element 12 in the optical transmission unit 1F via the package 90. The electricity-transmitting medium is electrically connected to the current source 24 in the optical reception unit 2F via the package 91.
An example of the packages 90 and 91 is the same as described in the twenty-seventh embodiment.

In the optical transmission device 5N according to this embodiment, since the bias current is transmitted from the optical reception unit 2F to the optical transmission unit 1F via the packages 90 and 91 and the electricity-transmitting medium, a dedicated wiring pattern for supplying the bias current need not be disposed between the optical reception unit 2F and the optical transmission unit 1F, thereby reducing the size of the optical transmission device 5N.
Although the optical transmission device having the average calculator 25 is stated in this embodiment, the same advantageous effects can be obtained even without disposing the average calculator 25. The same advantageous effects can be obtained even without disposing both the error detector 28 and the average calculator 25.

### Twenty-ninth Embodiment

FIG. 16 is a diagram schematically illustrating the configuration of an optical transmission device according to a twenty-ninth embodiment of the present invention.
In the optical transmission device 5P shown in the drawing, the optical transmission unit 1F and the optical reception unit 2F in the twenty-sixth embodiment are air-tightly sealed by packages 90 and 91 of which at least part has conductivity, respectively. The current source 24, the electricity-transmitting medium, and the light-emitting element 12 are electrically connected to each other via the packages 90 and 91. Specifically, the optical transmission unit 1F is air-tightly sealed by the package 90 of which at least part has conductivity and the optical reception unit 2F is air-tightly sealed by the package 91 of which at least part has conductivity. The electricity-transmitting medium in the light waveguide coated with metal (metal-coated light waveguide) 37 is electrically connected to the light-emitting element 12 in the optical transmission unit 1F via the package 90. The electricity-transmitting medium is electrically connected to the current source 24 in the optical reception unit 2F via the package 91.
An example of the packages 90 and 91 is the same as described in the twenty-seventh embodiment.

In the optical transmission device 5P according to this embodiment, since the bias current is transmitted from the optical reception unit 2F to the optical transmission unit 1F via the packages 90 and 91 and the electricity-transmitting medium, a dedicated wiring pattern for supplying the bias current need not be disposed between the optical reception unit 2F and the optical transmission unit 1F, thereby reducing the size of the optical transmission device 5P.
Although the optical transmission device having the average calculator 25 is stated in this embodiment, the same advantageous effects can be obtained even without disposing the average calculator 25. The same advantageous effects can be obtained even without disposing both the error detector 28 and the average calculator 25.

In the twenty-seventh to twenty-ninth embodiments, the configuration in which the light-transmitting medium and the electricity-transmitting medium are formed in a body is exemplified as the light-transmitting medium and the electricity-transmitting medium, the light-transmitting medium and the electricity-transmitting medium may be separately disposed without forming a body.
In the twenty-seventh to twenty-ninth embodiments, the optical transmission devices in which the optical transmission unit 1F and the optical reception unit 2F are air-tightly sealed by the packages 90 and 91 of which at least part has conductivity, respectively, and the current source 24, the electricity-transmitting medium, and the light-emitting element 12 are electrically connected to each other via the packages 90 and 91 are described, but the first embodiment may employ the same configuration. That is, although not shown here, the optical transmission unit 1 in the first embodiment may be air-tightly sealed by the package 90 of which at least part has conductivity, the optical reception unit 2 may be air-tightly sealed by the package 91 of which at least part has conductivity, and the electricity-transmitting medium may be electrically connected to the light-emitting element 12 via the package 90 and may be electrically connected to the static current source 29 via the package 91. Here, the electricity-transmitting medium is the same as described in the twenty-seventh to twenty-ninth embodiments.

### Thirtieth Embodiment

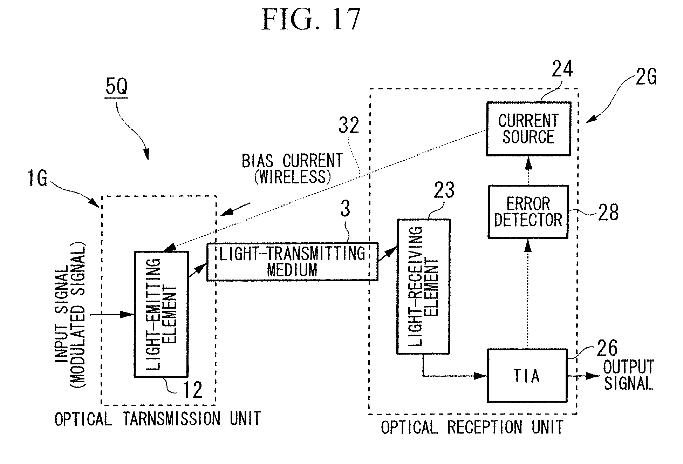

FIG. 17 is a diagram schematically illustrating the configuration of an optical transmission device according to a thirtieth embodiment of the present invention. Like elements described in the third embodiment are denoted by the same reference numerals and signs and description thereof is not repeated. In an optical transmission device 5Q according to this embodiment, an optical reception unit 1G is provided as the configuration corresponding to the optical transmission unit 1A in the third embodiment and an optical reception unit 2G is provided as the configuration corresponding to the optical reception unit 2B.
The optical transmission device 5Q has the configuration in which current is transmitted wirelessly without using the electricity-transmitting medium 31 in the third embodiment.
The electricity-transmitting medium 32 transmitting the current wirelessly may have a configuration including a modulator and a second antenna which are disposed in the optical reception unit 2G so as to transmit the bias current generated by the current source 24 as electric waves and a first antenna and a demodulation circuit which are disposed in the optical reception unit 1 G so as to receive the electric waves and to demodulate the received electric waves into the bias current.
In the optical transmission device 5Q according to this embodiment, the electrical wire for transmitting the bias current is not necessary.
In this embodiment, the same advantageous effects can be obtained even without disposing the error detector 28.

It is stated in the thirtieth embodiment that the electricity-transmitting medium is constructed to transmit the current wirelessly, but the first embodiment may have the same configuration (not shown). The electricity-transmitting medium for transmitting the current wirelessly may employ the configuration including a modulator and a second antenna which are disposed in the optical reception unit 2 so as to transmit the bias current generated by the static current source 29 as electric waves and a first antenna and a demodulation circuit which are disposed in the optical reception unit 1 so as to receive the electric waves and to demodulate the received electric waves into the bias current, as described above.

The optical transmission device according to the present invention is not limited to the above-mentioned configurations, but partial configurations may be added thereto or deleted therefrom.
In the example where the optical reception unit includes the current source (for example, the second embodiment), two or more selected from a group consisting of the error detector, the average calculator, the impedance-matching element, and the LPF may be disposed in the optical reception unit in combination.

### Other Embodiments

Hitherto, the optical transmission device in which the light-receiving element of the optical reception unit generates the bias current from the received optical signal and transmits the bias current to the light-emitting element of the optical transmission unit to control the emission intensity of the light-emitting element has been described, but the communications may be stabilized with a configuration of making a feedback control using bidirectional communications. Examples of such an optical transmission device include the followings, all of which can allow a decrease in size and allow bidirectional communications.

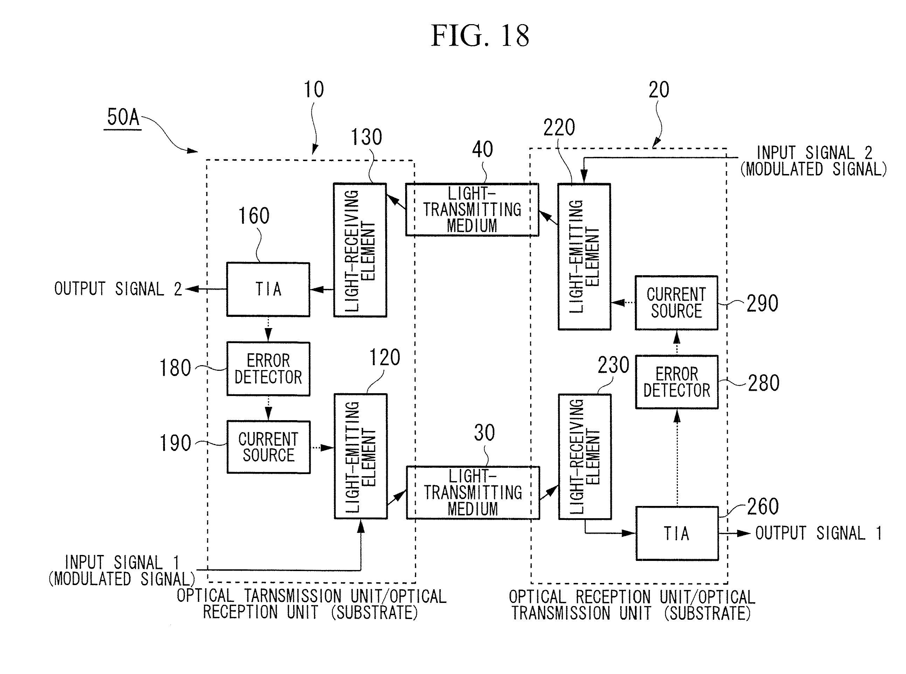

An optical transmission device 50A shown in FIG. 18 includes a first optical transmission and reception device 10 including a first light-emitting element 120, a first light-receiving element 130, a first TIA 160, a first error detector 180, and a first current source 190, a second optical transmission and reception device 20 including a second light-emitting element 220, a second light-receiving element 230, a second TIA 260, a second error detector 280, and a second current source 290, a first light-transmitting medium 30 optically connecting the first light-emitting element 120 and the second light-receiving element 230 to each other, and a second light-transmitting medium 40 optically connecting the second light-emitting element 220 and the first light-receiving element 130 to each other.
The first TIA 160 converts the current generated based on the received light intensity of the first light-receiving element 130 into a voltage and amplifies the voltage. The first error detector 180 regularly measures the received light intensity of the first light-receiving element 130 based on the voltage signal acquired by the first TIA 160 and outputs a voltage signal for controlling the bias current to be transmitted to the second light-emitting element 220 based on the measured value. The first current source 190 converts the voltage signal output from the first error detector 180 into bias current and drives the first light-emitting element 120. The second TIA 260 converts the current generated based on the received light intensity of the second light-receiving element 230 into a voltage and amplifies the voltage. The second error detector 280 regularly measures the received light intensity of the second light-receiving element 230 based on the voltage signal acquired by the second TIA 260 and outputs a voltage signal for controlling the bias current for driving the first light-emitting element 120 based on the measured value. The second current source 290 converts the voltage signal output from the second error detector 280 into bias current and drives the second light-emitting element 220.

The first light-emitting element 120 and the second light-emitting element 220 are the same as the light-emitting element 12 shown in FIG. 1.
The first light-receiving element 130 and the second light-receiving element 230 are the same as the light-receiving element 23 shown in FIG. 1.
The first light-transmitting medium 30 and the second light-transmitting medium 40 are the same as the light-transmitting medium 3 shown in FIG. 1.
The first TIA 160 and the second TIA 260 are the same as the TIA 26 shown in FIG. 1.
The power for controlling the first TIA 160 and the second TIA 260 are not shown here, but both are supplied from the outside.

In the optical transmission device 50A, a modulated signal is acquired from the outside to drive the first light-emitting element 120 and the second light-emitting element 220. Here, the modulated signal may employ any of a burst signal and a continuous signal, and an appropriate one can be selected. As described above, the bias voltage for driving the second light-emitting element 220 is controlled by the first error detector 180 and the bias current is transmitted to the second light-receiving element 230 via the first light-transmitting medium 30 by the first current source 190. Similarly, the bias voltage for driving the first light-emitting element 120 is controlled by the second error detector 280 and the bias current is transmitted to the first light-receiving element 130 via the second light-transmitting medium 40 by the second current source 290.
The optical transmission device 50A according to this embodiment can also obtain the same advantageous effects as the optical transmission device according to the second embodiment.
Here, it is stated that the first TIA 160 and the first error detector 180 are directly connected to each other and the second TIA 260 and the second error detector 280 are directly connected to each other, but the same advantageous effects can be obtained even when an average calculator is disposed between the TIA 160 and the error detector 180.

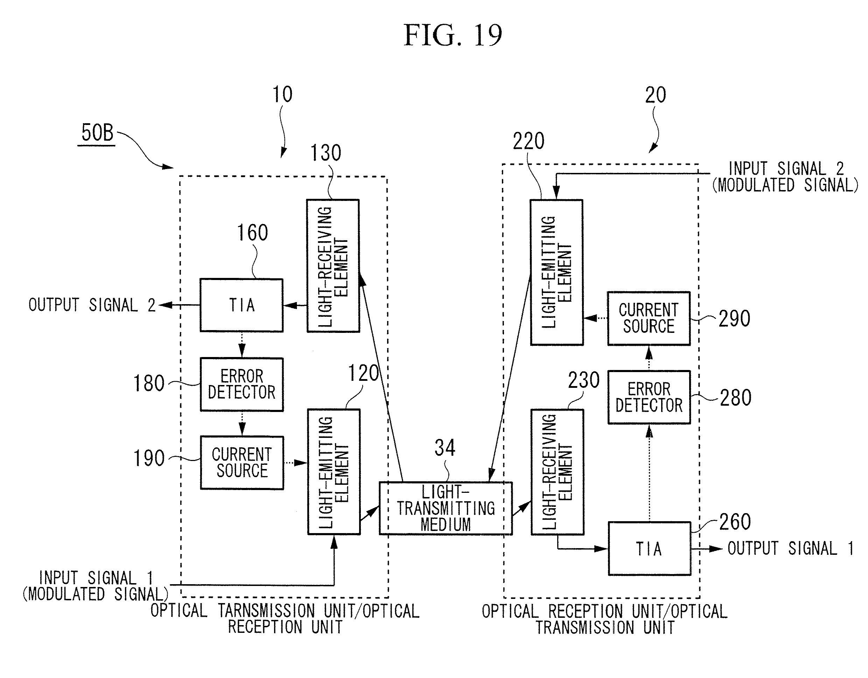

In the optical transmission device 50B shown in FIG. 19, a light-transmitting medium 34 in which the first light-transmitting medium 30 and the second light-transmitting medium 40 are combined into a single light-transmitting medium so as to allow single-core bidirectional communications is used instead of the first light-transmitting medium 30 and the second light-transmitting medium 40 in the optical transmission device 50A shown in FIG. 18. The optical transmission device 50B is the same as the optical transmission device 50A, except for this point. For example, the light-transmitting medium 34 can employ an optical multiplexer/demultiplexer.
According to this configuration, since the number of light-transmitting mediums can be reduced, it is possible to further reduce the size of the optical transmission device, thereby improving the handleability.
Here, it is stated that the first TIA 160 and the first error detector 180 are directly connected to each other and the second TIA 260 and the second error detector 280 are directly connected to each other, but the same advantageous effects can be obtained even when an average calculator is disposed between the TIA 160 and the error detector 180.

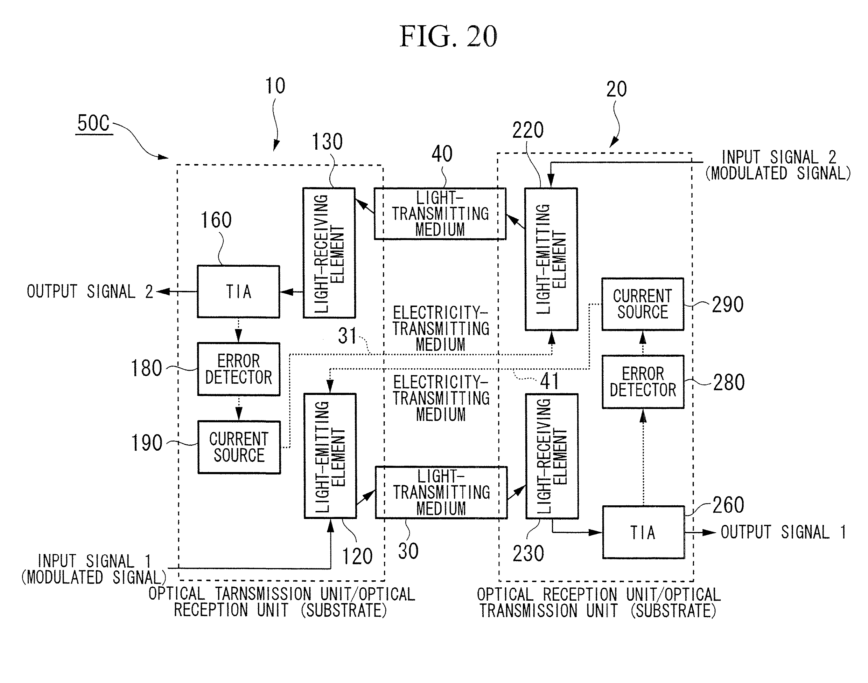

An optical transmission device 50C shown in FIG. 20 includes a first optical transmission and reception device 10 including a first light-emitting element 120, a first light-receiving element 130, a first TIA 160, a first error detector 180, and a first current source 190, a second optical transmission and reception device 20 including a second light-emitting element 220, a second light-receiving element 230, a second TIA 260, a second error detector 280, and a second current source 290, a first light-transmitting medium 30 optically connecting the first light-emitting element 120 and the second light-receiving element 230 to each other, a second light-transmitting medium 40 optically connecting the second light-emitting element 220 and the first light-receiving element 130 to each other, a first electricity-transmitting medium 31 electrically connecting the first current source 190 and the second light-emitting element 220 to each other, and a second electricity-transmitting medium 41 electrically connecting the second current source 290 and the first light-emitting element 120 to each other. The first TIA 160 converts the current generated based on the received light intensity of the first light-receiving element 130 into a voltage and amplifies the voltage. The first error detector 180 regularly measures the received light intensity of the first light-receiving element 130 based on the voltage signal acquired by the first TIA 160 and outputs a voltage signal for controlling the bias current to be transmitted to the second light-emitting element 220 based on the measured value. The first current source 190 converts the voltage signal output from the first error detector 180 into bias current and drives the second light-emitting element 220. The second TIA 260 converts the current generated based on the received light intensity of the second light-receiving element 230 into a voltage and amplifies the voltage. The second error detector 280 regularly measures the received light intensity of the second light-receiving element 230 based on the voltage signal acquired by the second TIA 260 and outputs a voltage signal for controlling the bias current to be transmitted to the first light-emitting element 120 based on the measured value. The second current source 290 converts the voltage signal output from the second error detector 280 into bias current and drives the first light-emitting element 120.

The optical transmission device 50C is the same as the optical transmission device 50A, except for the feedback control is performed by transmitting an electrical signal, not an optical signal.
The optical transmission device 50C controls the emission intensity of the first light-emitting element 120 based on the received light intensity of the second light-receiving element 230 and controls the emission intensity of the second light-emitting element 220 based on the received light intensity of the first light-receiving element 130. Accordingly, the controls can be independently performed, thereby allowing a more stable communication than that of the optical transmission device 50A.
The optical transmission device 50C can be suitably used in the fields of, for example, a USB (Universal Serial Bus) cable which is a standard of a high-speed transmission cable, an Infiniband cable, an intra-case wire in a mobile phone, a connecting wire between a game machine and a display, and a video wire between a display and a camera.
Here, it is stated that the first TIA 160 and the first error detector 180 are directly connected to each other and the second TIA 260 and the second error detector 280 are directly connected to each other, but the same advantageous effects can be obtained even when an average calculator is disposed between the TIA 160 and the error detector 180.

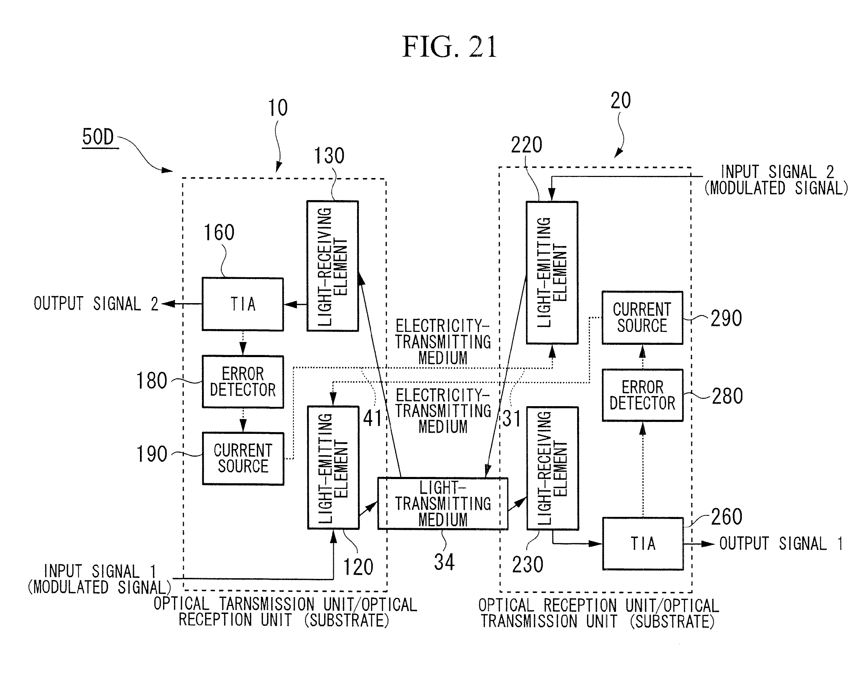

In an optical transmission device 50D shown in FIG. 21, a light-transmitting medium 34 in which the first light-transmitting medium 30 and the second light-transmitting medium 40 are combined into a single light-transmitting medium so as to allow single-core bidirectional communications is used instead of the first light-transmitting medium 30 and the second light-transmitting medium 40 in the optical transmission device 50C shown in FIG. 20. The optical transmission device 50D is the same as the optical transmission device 50C, except for this point. For example, the light-transmitting medium 34 is the same as the optical transmission medium 50B.
According to this configuration, since the number of light-transmitting mediums can be reduced, it is possible to further reduce the size of the optical transmission device, thereby improving the handleability.
The optical transmission device 50D can be suitably used in the fields of, for example, a USB (Universal Serial Bus) cable which is a standard of a high-speed transmission cable, an Infiniband cable, an intra-case wire in a mobile phone, a connecting wire between a game machine and a display, and a video wire between a display and a camera.
Here, it is stated that the first TIA 160 and the first error detector 180 are directly connected to each other and the second TIA 260 and the second error detector 280 are directly connected to each other, but the same advantageous effects can be obtained even when an average calculator is disposed between the TIA 160 and the error detector 180.

The optical transmission device may be constructed to transmit a large amount of data, in which the bias current is generated from the optical signal received by the light-receiving element of the optical reception unit and the bias current is transmitted to the light-emitting element of the optical transmission unit to control the emission intensity of the light-emitting element. Examples of such an optical transmission device include the followings, all of which can stably transmit a large amount of data and allow a decrease in size.

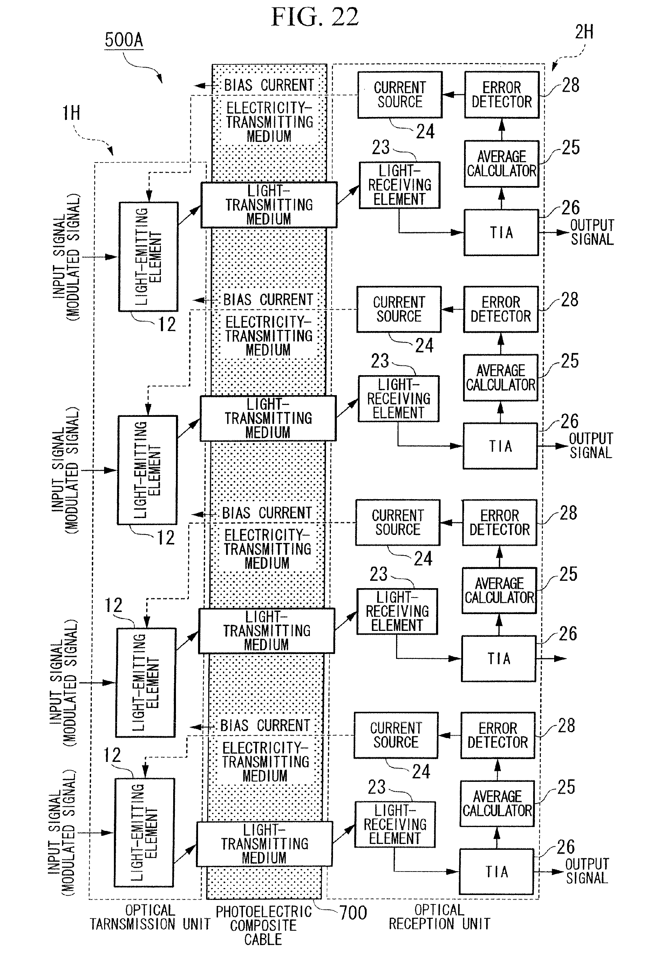

An optical transmission device 500A shown in FIG. 22 includes four sets of optical transmission devices 5C according to the fourth embodiment in parallel and includes a photoelectric composite cable 700 in which four sets of light-transmitting mediums and four sets of electricity-transmitting mediums are formed in a body. That is, the optical transmission unit 1H and the optical reception unit 2H are coupled to each other by a single photoelectric composite cable 700. The respective optical transmission devices of the four sets operate similarly to the fourth embodiment shown in FIG. 4. A cable in which an optical fiber as the light-transmitting medium and an electrical wire as the electricity-transmitting medium are combined can be exemplified as the photoelectric composite cable 700.

In the optical transmission device 500A, it is not necessary to dispose a driving circuit in the optical transmission unit. As a result, it is possible to reduce the size of the optical transmission unit. Since four sets of light-emitting elements are coupled to four sets of light-receiving elements and current sources by a single medium, it is possible to improve the handleability and to reduce the mounting cost.
The optical transmission device 500A can be suitably used in the fields of, for example, an HDMI (High-Definition Multimedia Interface) cable which is a standard of a high-speed transmission cable, a display port cable, a connecting wire between a high-speed data transmission device, a business copier, or a game machine and a display, and a video wire between a display and a camera.

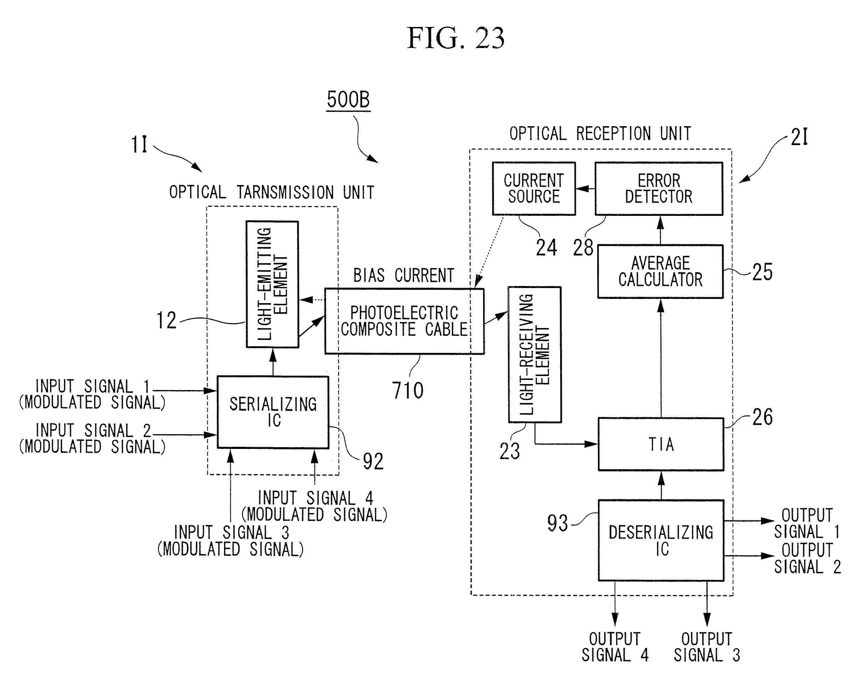

An optical transmission device 500B shown in FIG. 23 has a configuration in which a serializing IC 92 serializing data is disposed in the subsequent stage of the input signal in the optical transmission device 5C shown in FIG. 4 and a deserializing IC 93 parallelizing data is disposed in the subsequent stage of the TIA 26. A photoelectric composite cable 710 in which the light-transmitting medium and the electricity-transmitting medium are formed in a body is further disposed. Multiple types of signals are input to the optical transmission unit 1I from the outside and multiple types of signals are output from the optical reception unit 2I to the outside.
According to the optical transmission device 500B, it is possible to reduce the number of light-transmitting mediums and the number of electricity-transmitting mediums and thus to reduce the outer diameter of the photoelectric composite cable.
The optical transmission device 500B can be suitably used in the fields of, for example, an HDMI (High-Definition Multimedia Interface) cable which is a standard of a high-speed transmission cable, a display port cable, a connecting wire between a high-speed data transmission device, a business copier, or a game machine and a display, and a video wire between a display and a camera.

### Industrial Applicability

The present invention can be applied to the transmission of information using the optical communication over a relatively-short distance in the fields of high-speed data transmission devices such as a server or a router, vehicles, mobile phones, business copiers, and game machines.

## Claims

1. An optical transmission device comprising:
an optical transmission unit including a light-emitting element;
an optical reception unit including a static current source generating bias current for driving the light-emitting element;
a light-transmitting medium optically connecting the light-emitting element and a light-receiving element to each other; and
an electricity-transmitting medium transmitting the bias current from the static current source to the light-emitting element.

2. An optical transmission device comprising:
an optical transmission unit including a light-emitting element;
an optical reception unit including a light-receiving element and a current source generating bias current for adjusting an optical power of the light-emitting element based on an electrical signal into which light received by the light-receiving element is converted;
a light-transmitting medium optically connecting the light-emitting element and the light-receiving element to each other; and
an electricity-transmitting medium transmitting the bias current from the current source to the light-emitting element.

3. The optical transmission device according to claim 2, wherein the optical reception unit further includes an error detector measuring an intensity of the light received by the light-receiving element and controlling a magnitude of the bias current generated by the current source based on a measured value.

4. The optical transmission device according to claim 3, wherein the optical reception unit further includes a low-pass filter disposed between the error detector and the current source.

5. The optical transmission device according to claim 3, wherein the optical reception unit further includes a trans-impedance amplifier and a low-pass filter, and
wherein the light-receiving element, the trans-impedance amplifier, the low-pass filter, and the error detector are disposed in this order.

6. The optical transmission device according to any one of claims 2 to 5, wherein the optical reception unit further includes an average calculator calculating an average value of the intensity of the light received by the light-reeeiving element.

7. The optical transmission device according to any one of claims 1 to 6, wherein the optical transmission unit further includes an impedance-matching element.

8. The optical transmission device according to any one of claims 1 to 7, wherein the optical reception unit further includes an impedance-matching element.

9. The optical transmission device according to any one of claims 1 to 8, wherein the optical transmission unit further includes a low-pass filter disposed between the electricity-transmitting medium and the light-emitting element.

10. The optical transmission device according to any one of claims 1 to 9, wherein the optical transmission unit receives a differential input signal as an input signal from an outside.

11. The optical transmission device according to any one of claims 1 to 10, wherein the optical transmission unit further includes a protection circuit disposed between the electricity-transmitting medium and the light-emitting element.

12. The optical transmission device according to any one of claims 1 to 11, wherein one of a photoelectric composite cable in which the light-transmitting medium and the electricity-transmitting medium are combined in a body, a photoelectric composite wiring board in which a light waveguide and the electricity-transmitting medium are disposed on a substrate, and a light waveguide coated with metal is disposed as the light-transmitting medium and the electricity-transmitting medium.

13. The optical transmission device according to any one of claims 1 to 12, wherein the optical transmission unit and the optical reception unit are each air-tightly sealed by a conductive package, and
wherein the electricity-transmitting medium is electrically connected between the package air-tightly sealing the optical transmission unit and the package air-tightly sealing the optical reception unit.

14. The optical transmission device according to any one of claims 1 to 11, wherein the electricity-transmitting medium transmits current wirelessly.
